Europäisches Patentamt

European Patent Office

Office européen des brevets

(19)

(11) Numéro de publication: **0 115 779**
**B1**

(12) # FASCICULE DE BREVET EUROPÉEN

(45) Date de publication du fascicule du brevet:
**04.11.87**

(51) Int. Cl.⁴: **B 62 M 25/04**

(21) Numéro de dépôt: **84100163.9**

(22) Date de dépôt: **15.12.82**

(54) Manette d'actionnement pour dérailleur de cycle.

(30) Priorité: **30.12.81 FR 8124503**

(43) Date de publication de la demande:
**15.08.84 Bulletin 84/33**

(45) Mention de la délivrance du brevet:
**04.11.87 Bulletin 87/45**

(84) Etats contractants désignés:
**BE DE GB IT LU NL**

(56) Documents cité:
**CH-A-390 708**
**FR-A-2 114 323**
**FR-A-2 325 297**
**FR-A-2 345 340**
**FR-A-2 346 204**

(73) Titulaire: **SACHS- HURET S.A., 60, Avenue Félix Faure, F-92000 Nanterre (FR)**

(72) Inventeur: **Coue, Maurice, 6, Résidence du Vieux Puits, F-78810 Feucherolles (FR)**

(74) Mandataire: **Moncheny, Michel, c/o Cabinet Lavoix 2 Place d'Estienne d'Orves, F-75441 Paris Cedex 09 (FR)**

## Description

La présente invention concerne les manettes d'actionnement de dérailleurs ou dispositifs analogues, utilisées notamment sur des cycles.

Ces manettes comportent, dans la technique connue, un logement de section étagée délimitant un épaulement contre lequel vient buter la pièce métallique qui constitue la tête du câble. Selon le brevet FR-A-2 325 297 (correspondant au préambule de la revendication 1), la tête du câble vient en butée contre une partie d'extrémité d'un ressort métallique, repliée pour former une boucle reçue dans ledit logement. Il résulte de cette disposition que le câble doit être enfilé par son extrémité opposée à celle portant la tête et que ce montage est en general réalisé en usine, lors de l'assemblage de la manette et de son collier. De plus, le remplacement du câble est alors une opération relativement compliquée.

Le but de cette invention est de proposer une manette sur laquelle le câble puisse être monté facilement, notamment par un utilisateur, après que la manette ait elle-même été montée sur son collier de support.

A cet effet, l'invention a pour objet une manette, notamment pour dérailleurs de cycle, destinée à être reliée à un câble muni d'une tête, cette manette délimitant un logement étagé, comportant une partie de dimension supérieure à celle de la tête du câble et une partie de dimension intermédiaire entre celles du câble et de sa tête, caractérisée en ce que le logement est délimité en partie par une cloison constituant un moyen de retenue déformable élastiquement et comportant un passage par lequel le câble peut être engagé dans le logement par déformation dudit moyen de retenue.

Suivant d'autres caractéristiques:

- la manette délimite un premier logement cylindrique la traversant de part en part et dans lequel la tête du câble peut passer librement et un deuxième logement s'étendant parallèlement au premier et qui constitue ledit logement étagé, ce deuxième logement communiquant latéralement avec le premier par ledit passage ménagé dans la cloison et dont la largeur est inférieure au diamètre du câble;

- le ou chaque logement précité est à peu près symétrique par rapport à un plan passant par l'axe de rotation de la manette permettant ainsi le montage du câble d'un côté ou de l'autre.

L'invention va être décrite plus en détail ci-dessous en se référant au dessin annexé donné uniquement à titre d'exemple et sur lequel:

- la Figure 1 est une vue en coupe d'un ensemble de collier et de manette suivant l'invention;

- la Figure 2 est une vue en coupe suivant la ligne 2-2 de la Figure 1;

- la Fig. 3 est une vue en élévation en plus grande échelle de la manette;

- les Fig. 4 et 5 sont deux vues en élévation latérale de cette même manette.

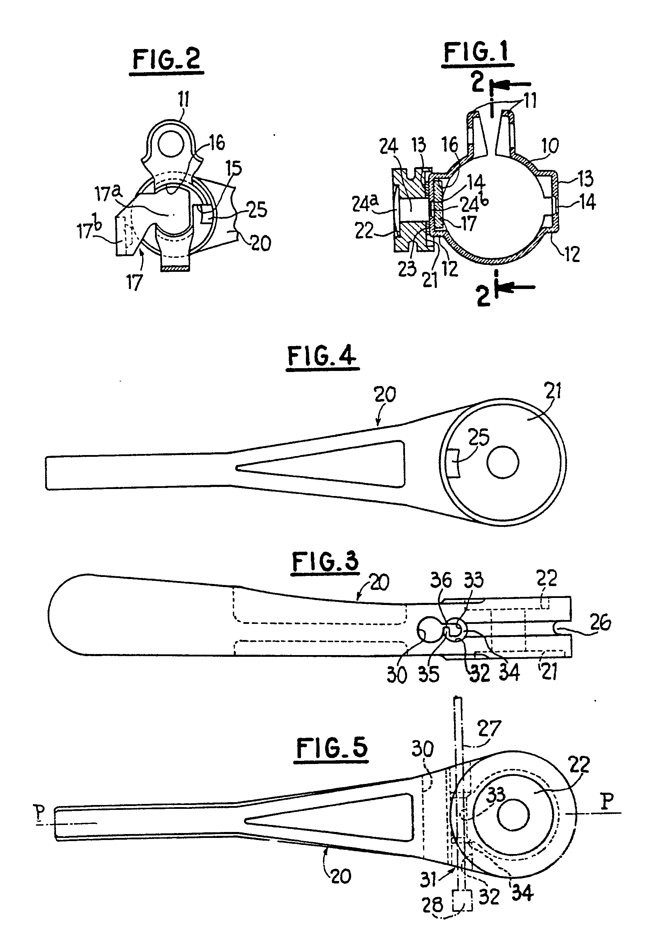

On voit sur le dessin et en particulier aux Fig. 1 et 2 un ensemble de manette par exemple une manette d'actionnement de dérailleur pour cycle, comprenant un collier 10 sur lequel est montée une manette 20 proprement dite. Le collier est conformé de façon à délimiter d'une part, des parties de fixation 11 pouvant être associées par exemple à des moyens classiques à vis et écrou, et d'autre part, deux parties en saillie 12 disposées à peu près à 90° par rapport aux pattes de fixation et diamétralement opposées entre elles. Chacune de ces deux saillies s'étend à peu près radialement par rapport au collier et délimite une surface d'appui 13 à peu près plane dirigée vers l'extérieur et s'étendant perpendiculairement au diamètre du collier. Cette surface d'appui est percée d'un orifice 14 centré sur ce même diamètre du collier.

Comme cela est visible sur la Fig.2, la partie en saillie comporte un décrochement 15 qui constitue une butée limitant la course angulaire de la manette. Cette partie en saillie délimite par ailleurs sur sa face interne dirigée vers l'axe du collier un logement 16 dans lequel peut être reçue une pièce 17 ayant une, forme en L dont une des branches 17$^a$ est conformée de façon à pouvoir être reçue dans le logement 16 et dont l'autre branche 17$^b$ est conformée pour servir de butée de gaine et laisser passer le câble d'actionnement.

Suivant l'invention également, la manette 20 est montée de façon très simple: cette manette réalisée par exemple en matière plastique ou autre comporte sur chacune de ses faces un chambrage 21, 22, le chambrage 21 dirigé vers le collier recevant de préférence une rondelle 23 en matériau élastique, par exemple en polyuréthanne, interposée entre le fond du chambrage et la surface d'appui du collier. Cette rondelle a par exemple une épaisseur de 4 mm à l'état libre et est comprimée jusqu'à une épaisseur d'environ 2 mm à l'assemblage. Les moyens de fixation de la manette comprennent un rivet 24$^a$ dont la tête 24 dirigée vers l'extérieur est reçue dans le chambrage 22 de la manette et dont le fût 24$^b$ est rivé derrière la face arrière de la saillie 12. Cette dernière est conformée pour que l'extrémité du rivet ne fasse pas saillie dans le logement 16 et ne gêne pas l'insertion de la pièce 17 formant butée de gaine.

La manette proprement dite va être décrite plus en détail en se référant aux Fig.3 à 5. Cette manette comporte sur sa face dirigée vers le collier un ergot 25 destiné à coopérer avec la butée 15 du collier pour limiter son débattement angulaire. Elle comporte une gorge 26 pour le passage du câble ainsi qu'un logement de forme originale permettant le montage de la tête du câble 27, qui de façon classique est constituée par une petite masse métallique 28 de forme à peu près cylindrique fixée à l'extrémité du câble. Le logement ménagé dans la manette comprend une première partie 30 à peu près cylindrique dont l'axe est orthogonal à celui du tourillon et dont le diamètre est légèrement supérieur à celui de la tête du câble. Cette première partie cylindrique traverse la manette de part en part et débouche à peu près tangentiellement dans un deuxième logement 31 étagé, qui comporte une partie cylindrique 32 de diamètre légèrement supérieur à celui de la tête du câble et un passage coaxial 33 dont le diamètre est supérieur à celui du câble, mais inférieur à celui de ladite tête. Un épaulement transversal 34 est donc ménagé à la jonction de la partie 32 et du passage 33. De plus, la portion de cloison 35 qui sépare les deux logements 30 et 31 comporte un passage 36 qui s'étend également sur toute l'épaisseur de la manette et qui sur au moins une partie de sa longueur a une largeur inférieure au diamètre du câble.

De préférence, cette partie de la manette est réalisée à peu près symétrique par rapport à un plan tel que le plan P reporté sur la Fig. 5, de sorte qu'il est prévu deux logements identiques 32 pour le câble qui peut donc être monté d'un côté ou de l'autre de la manette.

En dehors de ce premier avantage, la réalisation de la manette proprement dite est également très avantageuse puisqu'il n'est pas nécessaire de monter le câble en usine lors de la fabrication de la manette et que ce câble peut donc être monté par l'utilisateur très simplement en engageant son extrémité dans le logement cylindrique 30 puis en exerçant une force suffisante en direction du deuxième logement 31 pour faire franchir au câble la cloison 35 après quoi le câble est maintenu en place et ne peut se dégager de son logement.

## Revendications

1. Manette, notamment pour dérailleur de cycle, destinée à être reliée à un câble (27) muni d'une tête (28), cette manette délimitant un logement étagé (31), qui comporte une partie (32) de dimension supérieure à celle de la tête (28) du câble et une partie (33) de dimension intermédiaire entre celles du câble (27) et de sa tête (28), caractérisée en ce que le logement (31) est délimité en partie par une cloison (35) constituant un moyen de retenue déformable élastiquement et comportant un passage (36) par lequel le câble (27) peut être engagé dans le logement par déformation dudit moyen de retenue.

2. Manette suivant la revendication 1, caractérisée en ce que la manette délimite un premier logement (30) cylindrique la traversant de part en part et dans lequel la tête (28) du câble (27) peut passer librement et un deuxième logement (31) s'étendant parallèlement au premier et qui constitue ledit logement étagé, ce deuxième logement communiquant latéralement avec le premier par ledit passage (36) ménagé dans la cloison (35) et dont la largeur est inférieure au diamètre du câble.

3. Manette suivant l'une quelconque des revendications 1 et 2, caractérisée en ce que le ou chaque logement (30, 31) est à peu près symétrique par rapport à un plan (P) passant par l'axe de rotation de la manette, permettant ainsi le montage du câble d'un côté ou de l'autre.

## Patentansprüche

1. Bedienungshebel, insbesondere für eine Fahrrad-Gangschaltung, zur Verbindung mit einem mit einem Kopf (28) ausgestatteten Seil (27), wobei in dem Bedienungshebel ein abgestufter Sitz (31) gebildet ist mit einem Teilbereich (32), der größer ist als der Kopf (25) des Seils, und einem Teilbereich (33), dessen Abmessung zwischen der Abmessung des Seils (27) und derjenigen des Kopfes (28) liegt, dadurch gekennzeichnet, daß der Sitz (31) teilweise von einer ein elastisch verformbares Halterungsmittel bildenden Trennwandung (35) begrenzt ist, die einen Durchgang (36) aufweist, durch den hindurch das Seil (27) bei Verformung des Halterungsmittels in den Sitz einbringbar ist.

2. Bedienungshebel nach Anspruch 1, dadurch gekennzeichnet, daß in ihm ein erster zylindrischer Sitz (30) ausgebildet ist, der ihn von einer Seite zur anderen durchdringt und durch den der Kopf (28) des Seils frei hindurchtreten kann, sowie ein zweiter Sitz (31), der parallel zu dem ersten Sitz angeordnet ist und der den genannten abgestuften Sitz darstellt, und daß dieser zweite Sitz über den in der Trennwandung (35) angebrachten Durchgang seitlich mit dem ersten Sitz in Verbindung steht, dessen Breite kleiner ist als Durchmesser des Seils.

3. Bedienungshebel nach einem der Ansprüche 1 und 2, dadurch gekennzeichnet, daß der oder jeder Sitz (30, 31) annähernd symmetrisch zu einer Ebene (P) angeordnet ist, durch die die Drehachse des Bedienungshebels verläuft, derart daß die Montage des Seils beliebig von der einen oder der anderen Seite erfolgen kann.

## Claims

1. A lever in particular for a cycle derailleur, for connection to a cable (27) provided with a head (28), this lever defining a stepped cavity (31) which includes a part (32) having a larger dimension than that of the head (28) of the cable and a part (33) having a dimension between those of the cable (27) and of its head (28), characterised in that the cavity (31) is partly defined by a partition (35) constituting an elastically deformable retaining means and including a passage (36) through which the cable (27) may be engaged in the cavity by deformation of said retaining means.

. A lever according to claim 1, characterised in that the lever defines a first cylindrical cavity (30) extending throughout the lever and in which the head (28) of the cable (27) may freely pass, and a second cavity (31) extending in a direction parallel to the first one and constituting said stepped cavity, this second cavity communicating laterally with the firstone through said passage (36) formed in the partition (35) and whose width is less than the diamter of the cable.

3. A lever according to either one of the claims 1 and 2, characterised in that the or each cavity (30, 31) is roughly symmetrical relative to a plane (P) passing through the axis of rotation of the lever whereby it is possible to mount the cable on one side or the other.

FIG.2

FIG.1

FIG.4

FIG.3

FIG.5